(19)

Europäisches Patentamt
European Patent Office
Office européen des brevets

(11)　　EP 4 708 806 A1

(12)　　EUROPEAN PATENT APPLICATION

(43) Date of publication:
　　　11.03.2026　Bulletin 2026/11

(21) Application number: 24306455.7

(22) Date of filing: 05.09.2024

(51) International Patent Classification (IPC):
　　　H04L 47/80 (2022.01)　　　H04L 41/5025 (2022.01)
　　　H04L 67/61 (2022.01)　　　H04W 28/24 (2009.01)

(52) Cooperative Patent Classification (CPC):
　　　H04L 47/805; H04L 41/5025; H04L 67/61;
　　　H04W 28/24

(84) Designated Contracting States:
　　　AL AT BE BG CH CY CZ DE DK EE ES FI FR GB
　　　GR HR HU IE IS IT LI LT LU LV MC ME MK MT NL
　　　NO PL PT RO RS SE SI SK SM TR
　　　Designated Extension States:
　　　BA
　　　Designated Validation States:
　　　GE KH MA MD TN

(71) Applicants:
　　　• Mitsubishi Electric R&D Centre Europe B.V.
　　　　1119 NS  Schiphol Rijk Amsterdam (NL)
　　　Designated Contracting States:
　　　FR

• Mitsubishi Electric Corporation
　Tokyo 100-8310 (JP)
　Designated Contracting States:
　AL AT BE BG CH CY CZ DE DK EE ES FI GB GR
　HR HU IE IS IT LI LT LU LV MC ME MK MT NL NO
　PL PT RO RS SE SI SK SM TR

(72) Inventor: BOUTTIER, Arnaud
　　　35708 Rennes Cédex 7 (FR)

(74) Representative: Plasseraud IP
　　　104 Rue de Richelieu
　　　CS92104
　　　75080 Paris Cedex 02 (FR)

(54)　**LEARNING-BASED METHOD TO ESTIMATE THE SURVIVAL TIME IN CONTROL SYSTEMS USING WIRELESS COMMUNICATIONS**

(57)　It is proposed to request an adapted level of Quality of Service "QoS" for a given agent, wirelessly connected through a telecommunication network to a controller to perform a task. This task is performed by applying successive control commands received from the controller and based at least on sensed data successively received by the controller. The requested QoS level can be chosen in a list proposing a plurality of different QoS levels (QoS#1, QoS#2, QoS#3, QoS#4, QoS#5), ordered from a highest QoS level (QoS#1) to a lowest QoS level (QoS#5). A survival time is determined for said given agent at a current time, said survival time being defined as number of consecutive control commands not applied by the agent due to communication failure with the controller, and that the agent can afford before going into an emergency mode. The number of QoS levels proposed in the list (QoS#1 , QoS#2) depends on the survival time (ST=3), the lower the survival time is, and the lower the number of proposed QoS levels is, the list being reduced, depending on the survival time, by removing the lowest QoS levels (QoS#3, QoS#4, QoS#5) from the list.

FIG. 5

**Description**

The present description is related to an automatic control of dynamical systems using QoS-based wireless communications.

The automatic control theory, hereafter simply reported as "control", is the science dealing with methods for the determination of laws for controlling dynamical systems that can be realized by automated devices, i.e., without human intervention.

At any given time, a dynamical system has a state $s_t$ representing a point in an appropriate state space 5. The system is typically made of one or several devices and is called "robot" or "agent" hereafter. The agent is required to be steered from an arbitrary initial state to an arbitrary final state or more generally to follow an arbitrary reference target trajectory. The state of the agent is driven by a so-called "controller" that generates a control action applied to the agent through so-called "actuators".

That kind of system can be described by a space-state equation of the kind $\dot{s}_t = f(s_t, u_t)$ where $f(.)$ is a generally nonlinear function and $u_t$ the command generated by the controller. There are two common classes of control action: "open loop" and "closed loop".

In an open-loop control system, the control action from the controller is independent from the agent variable while in a closed-loop control system, the control action is dependent on the desired and actual agent state as measured using sensors. The controlled systems can be of any kind such as a sewing machine, a robot, a car, any other vehicle, etc.

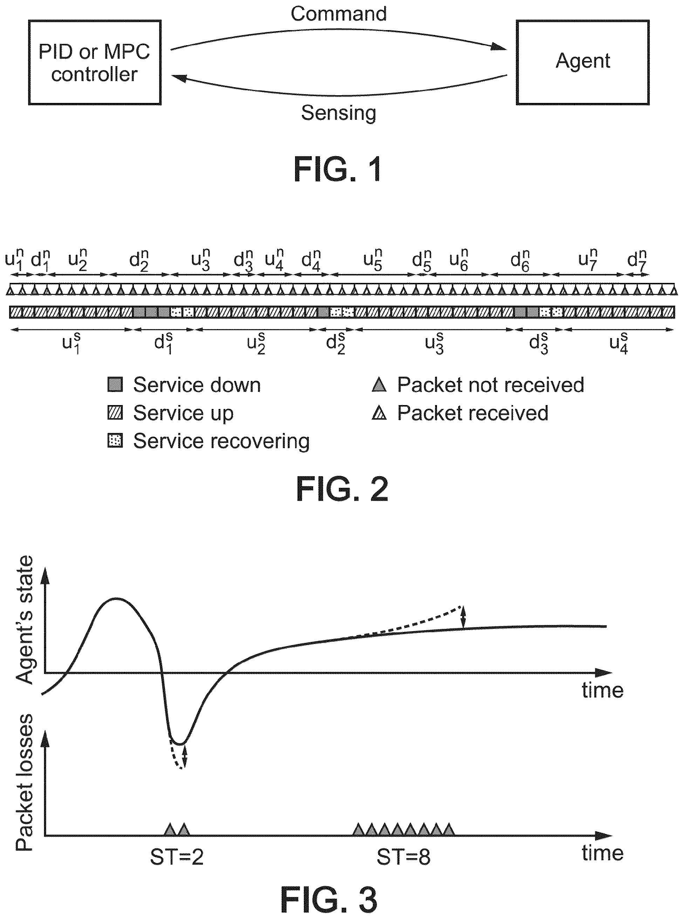

Here, a focus is made on control applications where the agent and the controller are connected using a wireless communication network to transmit the control action to the actuators and to retrieve the measurements from the sensors (as shown on figure 1).

Control applications can rely on any wireless transmission technology such as WiFi, Bluetooth, LTE, etc. Recently, the 3GPP standardization body specified the 5G system that incorporates dedicated means to address control applications, and more specifically ultra-reliable and low latency communications ("URLLC"). Wireless transmissions are suitable for mobile or transportable devices such as robots or vehicles of any kind such as Automated Guided Vehicles (AGV), Autonomous Mobile Robots (AMR), etc.

On the other hand, wireless communication systems are prone to packet losses due to radio propagation effects - attenuation loss, shadowing, multiplicative and additive noises - but also congestion effects when the timely transmission of packets requires more radio resources than available (this effect may be related to the first one). As a result, the design of the control applications must account for the possible occurrence of packet losses and/or transmission delays.

There may be several reasons for the controlled system to not receive an updated command. This can result from a congestion at a base station of a cellular 5G network or from propagation impairments, leading to a packet loss from the controlled system perspective. For loopback systems, this can also result from the loss of a sensing value, preventing the controller from computing an updated command.

In such a case, the controller can either send a backup or fallback command replacing the missing one or not transmit any command at all. The fallback command can then be used as such by the agent, or it can be generated by the agent itself in case no new command is received. A fallback command is a command meant to allow for the system to continue its operations for a while without being fed with an updated command. Typical solutions are to apply a null command, the previous command or a predicted command based on past values, etc. In all these cases, the behaviour of the system is altered with a possible degradation of its performance.

The performance of controlled systems is generally measured using physical indicators related to the target application, and more specifically by checking its ability to keep control metrics below some tolerance(s), i.e., values that shall never be exceeded. This can be for instance a distance between the current state and the target trajectory. This is often described as the expected application Quality of Experience (QoE). The quality of the control is first defined by the ability of the controller to reach the expected QoE, i.e., to enforce the tolerance(s).

The control quality is therefore directly related to communication conditions. Due to possible fluctuations in the radio channel, the performance of the wireless link may change over time for a given configuration of the communication parameters. It is not the purpose of the applications to define the configuration of the communication system. Dealing with applications, the wireless communication system (e.g., a wireless network) appears most of the time as a black box that randomly loses packets and/or delays their delivery.

A common solution is to define a level of minimal communication-related performance, that can be referred to a so-called "Quality of Service" (QoS), to be achieved by the communication system to reach the expected QoE. It is then the task of the transmission system to adjust its configuration to fulfil the objective with respect to the changes in the transmission environment. In such systems, hereafter called "QoS-based communication systems", the packets to be transmitted are tagged with a QoS indicator or identifier that is used by the system to fulfil the expected level of communication-related performance.

Quality of Service (QoS) is a set of technologies that work on a network to guarantee its ability to dependably run high-priority applications and traffic under limited network capacity. QoS technologies accomplish this by providing differentiated handling and capacity allocation to specific flows in network traffic. This enables the network to assign the order in which packets are handled, and the amount of bandwidth afforded to that application or traffic flow. Measurements of concern to QoS are typically bandwidth (throughput), latency (delay), jitter (variance in latency), and packet error rate. The most common tool for enforcing QoS is to set a priority level to critical packets. In more advanced systems such as the 3GPP 5G cellular network technology, the QoS is described using the so-called QoS profile, a set of values which identifies the QoS characteristics that should be applied to a "service data stream" (SDF) itself bound to a specific application.

Most of the applications do not support QoE or QoS indicators that would be used to tag the packets to be transmitted. Even though, such a solution would require the conversion of the application specific QoE or QoS indicators to a format compatible with the communication system. To cope with this kind of situations, a focus is made here on communication systems that rely on a "QoS flow" mechanism, where the system establishes a logical channel within which all the packets are transmitted according to the same QoS profile. Basically, the application negotiates beforehand the establishment of a QoS flow, and the system then automatically tags the packets with the corresponding QoS indicator using e.g., filtering mechanisms based on input and output IP or MAC addresses, application type, etc. The negotiation phase, or admission control, is meant to check if the system can enforce the required QoS profile with respect to its available resources and system's current load.

The 5G system has specifically been designed to implement advanced QoS mechanisms. 5G Quality of Service (QoS) model is based on QoS Flows. Each QoS flow has a unique identifier called QoS Flow Identifier (OFI). There are two types of flows: Guaranteed Bit Rate (GBR) QoS Flows and Non-GBR QoS Flows. The QoS Flow is the finest granularity of QoS differentiation in the Packet Data Unit (PDU) Session. User Plane (UP) traffics with the same QFI receive the same forwarding treatment. Every QoS flow has a QoS profile that includes QoS parameters and QoS characteristics. Applicable parameters depend on GBR or non-GBR flow type. QoS characteristics are standardized or dynamically configured.

For each QoS Flow, the QoS profile shall include the QoS parameters:

-    5G QoS Identifier (5QI); and

-    Allocation and Retention Priority (ARP).

For each Non-GBR QoS Flow only, the QoS profile may also include the QoS parameter:

-    Reflective QoS Attribute (RQA).

For each GBR QoS Flow only, the QoS profile shall also include the QoS parameters:

-    Guaranteed Flow Bit Rate (GFBR) - UL and DL; and

-    Maximum Flow Bit Rate (MFBR) - UL and DL.

In the case of a GBR QoS Flow only, the QoS profile may also include one or more of the QoS parameters:

-    Notification control; and

-    Maximum Packet Loss Rate - UL and DL.

Moreover, a "5QI" is a scalar that is used as a reference to 5G QoS characteristics i.e., access node-specific, parameters that control QoS forwarding treatment for the QoS Flow (e.g., scheduling weights, admission thresholds, queue management thresholds, link layer protocol configuration, etc.). There exist standardized 5QI values. 5QI can also be pre-configured. Standardized or pre-configured 5G QoS characteristics, are indicated through the 5QI value, and are not signalled on any interface. The 5G QoS characteristics for QoS Flows with dynamically assigned 5QI are signalled as part of the QoS profile.

The allocation and Retention Priority (ARP) is a QoS parameter containing information about the priority level, the pre-emption capability and the pre-emption vulnerability. The priority level defines the relative importance of a resource request. This allows deciding whether a new QoS Flow may be accepted or needs to be rejected in the case of resource limitations (typically used for admission control of GBR traffic). It may also be used to decide which existing QoS Flow to pre-empt during resource limitations.

The Reflective QoS Attribute (RQA) is an optional parameter which indicates that certain traffic (not necessarily all) carried on this QoS Flow is subject to Reflective QoS.

The QoS Parameter "Notification Control" indicates whether notifications are requested from the RAN when the GFBR can no longer (or again) be fulfilled for a QoS Flow during the lifetime of the QoS Flow. Notification control may be used for a GBR QoS Flow if the application traffic is able to adapt to the change in the QoS.

The GFBR denotes the bit rate that is guaranteed to be provided by the network to the QoS Flow over the Averaging Time Window.

The MFBR limits the bit rate to the highest bit rate that is expected by the QoS Flow (e.g. excess traffic may get discarded or delayed by a rate shaping or policing function at the UE, RAN, UPF). Bit rates above the GFBR value and up to the MFBR value, may be provided with relative priority determined by the Priority level of the QoS Flows.

The Maximum Packet Loss Rate (UL, DL) indicates the maximum rate for lost packets of the QoS flow that can be tolerated in the uplink and downlink direction.

The QoS characteristics associated with 5QI are as follows:

- The Resource Type (GBR, Delay critical GBR or Non-GBR);

- The Priority level associated with 5G QoS characteristics, indicating a priority in scheduling resources among QoS Flows. The lowest Priority level value corresponds to the highest Priority;

- The Packet Delay Budget (PDB) defining an upper bound for the time that a packet may be delayed between the UE and the UPF that terminates the N6 interface;

- The Packet Error Rate (PER) defining an upper bound for the rate of PDUs (e.g. IP packets) that have been processed by the sender of a link layer protocol (e.g. RLC in RAN of a 3GPP access) but that are not successfully delivered by the corresponding receiver to the upper layer (e.g. PDCP in RAN of a 3GPP access). Thus, the PER defines an upper bound for a rate of non-congestion related packet losses. The purpose of the PER is to allow for appropriate link layer protocol configurations (e.g. RLC and HARQ in RAN of a 3GPP access);

- The Averaging window (for GBR and Delay-critical GBR resource type only) representing the duration over which the GFBR and MFBR shall be calculated;

- The Maximum Data Burst Volume (for Delay-critical GBR resource type only): Each GBR QoS Flow with Delay-critical resource type shall be associated with a Maximum Data Burst Volume (MDBV). MDBV denotes the largest amount of data that the 5G-AN is required to serve within a period of 5G-AN PDB (i.e. 5G-AN part of the PDB).

A least one problem arises then.

When supporting QoS, a transmission system is due to enforce the requested QoS for the served users throughout the lifetime of the transmission. As control traffic is often periodic, radio resource congestion and thus packet losses may occur when several agents request for transmitting a packet at the same time and/or when the radio conditions experienced by one or several agents require significantly more radio resources to achieve the expected level of performance. To avoid such issues, transmission systems usually implement an admission control algorithm: each time a new agent applies for a new QoS flow, the system checks if it can enforce the requested QoS profile with respect to the existing traffic and available resources.

However, the admission control cannot be too restrictive unless rejecting too often applications while resources are available most of the time. Conversely, if the system would systematically grant any new agent, congestions would regularly occur, thus often breaking the QoS enforcement. In practice, the admission control gives access to new applications with a given probability that the requested QoS might not be enforced from time to time. The occurrence of such events is dealt with in the Service Level Agreements (SLA) signed between the operator and the end user e.g., by provisioning penalties in case of congestion with a given occurrence and/or duration.

Most of the systems, including the 5G system, assumes that all the packets related to an application stream are transmitted within the same QoS flow. The conventional approach is thus to select a QoS profile that is suitable for the task whatever the state of the agent in accordance with the SLA. This profile will be denoted hereafter as the *nominal QoS profile.* Doing so, the system can achieve the expected QoE in any situation. In case the nominal QoS is high, its enforcement may require many resources leading to possible congestion issues.

However, the control could afford a less demanding QoS profile (i.e., less sensitive to errors, to delay or jitter, etc.) in some phases, thus reducing the burden on the radio resources. Thus, if applying the nominal QoS enables to get the appropriate performance at any time, it also leads the system to allocate more radio resources than required most of the time.

Another problem is that the communication system cannot differentiate between the different service data streams with the same QoS profile even though they correspond to different levels of truly required QoS with respect to the instantaneous status of the agents. The system may thus drop packets for agents in a critical phase while keeping the packets associated to agents in a steady phase. The overall performance of the agents served by the communication systems may thus be worse than it would be if it was possible to account for the actual control requirements of the agents. Ultimately, it may occur that the performance of some agents may be degraded below the required QoE. The problem addressed here is to mitigate the occurrence of such congestion issues.

The present disclosure aims to improve the situation.

It proposes to this end a method implemented by computer means to request an adapted level of Quality of Service "QoS" for a given agent, wirelessly connected through a telecommunication network to a controller to perform a task, by applying successive control commands received from the controller and based at least on sensed data successively received by the controller,

The requested QoS level being chosen in a list proposing a plurality of different QoS levels, ordered from a highest QoS level to a lowest QoS level,

Wherein a survival time is determined for said given agent at a current time, said survival time being defined as a number of consecutive control commands not applied by the agent due to communication failure with the controller, and that the agent can afford before going into an emergency mode,

And wherein the number of QoS levels proposed in the list depends on the survival time, the lower the survival time is, and the lower said number of proposed QoS levels is, the list being reduced, depending on the survival time, by removing the lowest QoS levels from the list.

Therefore, a high QoS level is assigned to an agent determined as having a short survival time. Indeed, this agent cannot afford losing too many successive control commands and would go into emergency mode relatively soon. The "emergency mode" can be defined for example as a specific procedure previously stored in a memory of the agent and followed by the agent to stop its current operation in a safe way. When the survival time is short, the QoS levels that can be proposed to the agent are necessarily high, reducing thereby the QoS levels that the aforesaid list can propose to the best QoS levels.

Reversely, a low QoS level can be assigned to an agent determined as having a long survival time, since this agent can afford losing some successive control commands, due to communication failure with the controller (because of, inter alia, its low QoS assigned level), before needing to go into the emergency mode. In this case, the number of QoS levels that the list can propose is high.

There appears then a link between the different QoS levels that can be assigned to an agent and the survival time currently determined for this agent.

In an embodiment where the agent is configured to use a control command received from the controller at each corresponding time increment, so that, in case of communication failure with the controller, the agent is configured to use at least one predetermined fallback command for a given number of successive time increments before going into the emergency mode, the survival time corresponds then to this given number of successive time increments before going into the emergency mode.

For example, the agent can go into the so-called emergency mode at the next time increment.

The successively applied fallback commands before going into the emergency mode can be a same command, or alternatively can be different.

In this embodiment, the survival time can be determined from an application of a model giving the survival time, knowing:

- at least a current operation of the agent, and
- said at least one fallback command that the agent applies in case of communication failure.

In an embodiment, the model is built from learning observations of similar current operations of the agent, and applications of one or several successive fallback commands until the agent is to be driven into the emergency mode.

In an embodiment, the aforesaid current operation of the agent is defined according to a planned trajectory of operation of the agent, and the model learns therefore from a multiplicity of given planned trajectories, respective numbers of successively applied fallback commands before going into the emergency mode. A survival time associated to a planned trajectory corresponds therefore to a number of successive fallback commands that the agent can apply within a tolerance margin relatively to the associated planned trajectory, before going into the emergency mode.

Therefore, in this embodiment, once the model has learned the survival time for a given planned trajectory, a corresponding survival time can be determined for a similar planned trajectory in real situation, and applying a corresponding number of successive fallback commands will not deviate the agent from the planned trajectory beyond the aforesaid tolerance margin.

In an embodiment, a current operation of the agent can be defined according to a planned trajectory of operation of the agent, and the model determines, based on the planned trajectory, a number of successive fallback commands as the survival time, that the agent can apply before receiving again control commands from the controller and reaching again the planned trajectory, without going into the emergency mode. Therefore, this refined embodiment proposes that the aforesaid model learns the number of successive fallback commands that the agent can apply, depending on the planned trajectory, before recovering the communication link between with the controller and receiving thus new control commands. Therefore, when applying the new commands, if the operation of the agent can reach again the planned trajectory, the aforesaid number of successive fallback commands that the agent applied is deemed to correspond to the survival time associated to the planned trajectory.

In a more general embodiment, the aforesaid learning can be performed at least partly offline (typically in view to test the agent in critical situations which are preferably to avoid in real situations for safety reasons).

Moreover, the learning can be based, at least partly, on statistical observations implemented by a Monte-Carlo algorithm (in view typically to take into account imperfections of a model based on state prediction, and to incorporate thereby a statistical knowledge of the imperfections typically in a trained neural network implementing the aforesaid model).

In an embodiment, the controller is configured to send to the agent, along with a current control command, at least one switching command to use as a fallback command in case the agent does not receive a new control command after said current control command.

Here, the wording "at least one switching command" aims at the possibility for the controller to send several different switching commands that the agent can apply as successive different fallback commands. Alternatively, the controller can send one switching command that the agent applies repeatedly as successive same fallback commands.

Alternatively to this embodiment, the agent can store in a memory a fallback command to apply in case of communication failure with the controller.

In an embodiment, the controller is configured to send to the agent, along with a current control command, a survival time currently determined to allow the agent to apply a number of successive fallback commands after the application of the current control command and before going into the emergency mode, in case the agent does not receive any new control command after the aforesaid current control command. This number of successive fallback commands to apply corresponds thereby to the survival time received from the controller.

In a more general embodiment, a future state of the agent can be determined from a prediction function of the state of the agent after an implementation of a current control command, and the survival time can be determined from an analysis of variation of said prediction state function, the less varying the prediction state function is within a time period and the higher the survival time is.

This is shown typically on figure 3 commented below.

In an embodiment implying said given agent and other agents sharing resources of the telecommunication network with the given agent:

- a survival time is determined for each agent,
- the agents are sorted according to their respective determined survival times, from the lowest survival time to the highest survival time, and
- a QoS level is assigned to each communicating device, depending on its survival time, the highest QoS level being assigned to the device having the lowest survival time, while the lowest QoS level is assigned to the device having the highest survival time.

Therefore, the QoS levels are assigned in an optimal way, depending on the survival times determined for each agent.

The present disclosure aims also at a computer program comprising instructions causing the implementation of the method as defined above, when said instructions are executed by a processing unit.

The present disclosure aims also at a controller, comprising a processing unit to implement the method as defined above, the processing unit being configured thus to:

- determine a survival time for the agent, and
- request to the wireless network a level of QoS for the agent, said level of QoS depending on the determined survival time.

In an embodiment where the controller is connected to a plurality of agents, its processing unit is configured to determine a current survival time for each agent, and to request to the wireless network a level of QoS for each agent, said level of QoS depending on the current survival time of the agent and on currently available resources provided by the telecommunication network.

More details and advantages of possible embodiments of the invention will be presented below with reference to the appended drawings, where:

- Figure 1 shows a typical architecture of a remotely controlled system including an agent and a remote controller of this agent,
- Figure 2 shows metrics such as reliability, availability, and survival time,
- Figure 3 shows an example of variation over time of the survival time,
- Figure 4A shows an example of list of admissible QoS profiles,
- Figure 4B illustrates a "luring" the 5G network using two QoS flows for a same application,
- Figure 5 shows an example of variation of the admissible QoS levels that can be requested according to the agent's state,
- Figure 6 illustrates the principle of the control of a remote agent, from a controller which is here a server,
- Figure 7 shows an example of conditions for an agent to fall into a so-called "emergency mode", after the survival time,
- Figure 8 illustrates a general principle of the survival time computation (from a noiseless model in the present example),
- Figure 9 illustrates the survival time computation form Monte Carlo simulations,
- Figure 10 illustrates a detection of an imminent emergency mode from a trajectory prediction,
- Figure 11 illustrates a general principle of the survival time computation algorithm from a trajectory prediction,
- Figure 12 shows an example of implementation of the survival time computation algorithm from several possible successive trajectory predictions,
- Figure 13 illustrates the learning of the survival time in different situations from model-based Monte-Carlo simulations,
- Figure 14 illustrates the reduction of the computational burden when using a neural network,
- Figure 15 shows the implementation of the transmission of the predicted survival time, computed by using for example a neural network,
- Figure 16 shows the learning according to a closed-loop model to predict a future step N,
- Figure 17 illustrates the use of the agent's state prediction to compute the survival time,
- Figure 18 illustrates an example of embodiment where a predicted survival time is transmitted to the agent to stop its operation in case of not receiving N data packets corresponding to the transmitted survival time value = N, and
- Figure 19 shows schematically a system comprising a processing unit of a controller CTRL communication through a wireless network NW with a plurality of agents, for controlling respective operations of the agents, in an exemplary embodiment

The proposed method disclosed hereafter can be implemented in the context of control applications that rely on wireless communications to exchange control information between a control server and connected agents. Referring to the example of figure 1, a controller:

- receives data from sensors of a current real state of an agent (a robot for example including a wireless communication device) and/or of an environment of the agent (arrow "sensing" of figure 1), and
- computes, on the basis of the received sensed data, a control command to perform a specific task or to continue to implement this specific task.

The controller can be of a PID type (for "Proportional-Integral-Derivative") or of a MPC type (for "Model-based Predictive Control"), as more detailed below.

The agent can be a robot controlled to perform a task in a plant for example, and its wireless communication device can share telecommunication resources of a wireless network with other wireless communication devices of other robots (for example in a same plant).

When dealing with such connected systems (controller plus one or several agents), the loss of packets appears as a major source of performance degradation. Upon application of a fallback command, the agent necessarily deviates from its nominal path as it would have been obtained using the "optimal" command. The command is deemed to be optimal when it has been correctly updated by the controller (because latest sensed data were correctly received by the controller), and when it is correctly received by the agent.

If most of the agents can afford one packet loss or few packets loss, "simply" leading to a little degradation of its performance, in terms of variance for some control metrics, losing several consecutive packets on a row may rapidly be detrimental for the agent.

It is proposed below to use a metric called "survival time" (ST) that measures the number of consecutive times an agent can afford without receiving updated commands (with respect to an observation of the agent's state) before breaking its tolerance margins and thus going into a risk of failure or in a degraded state, called hereafter "emergency mode". Assuming that commands can only be lost due to communication impairments, the survival time can also be defined as the number of consecutive packet losses a system (agent and controller) can afford before breaking its tolerance margins.

As explained hereunder, the survival time enables to establish a relationship between the Packet Error Rate (PER) achieved by the communication system and the control-related metrics that are the reliability and availability metrics. It is thus possible to define a required level of performance for the communication layer from control-relayed figures of merit.

Control systems are considered here to be in an emergency mode when their state breaks some tolerance margins. As explained before, this may occur when losing one or several commands on a row. The survival time metric is used to measure the number of consecutive command losses an agent can afford. When the agent has gone into a risk of failure - i.e. the so-called emergency mode - (after ST+1 command losses), it may take some time to recover. Therefore, control systems are also qualified in terms of availability that measures the probability of the service to perform as required under given conditions at a given time t, as illustrated in the example of figure 2 where, at a time i:

- the periods (time increments) during which the network is up are denoted $u_i^n$,

- the periods during which the service is up are denoted $u_i^s$,

- the periods during which the network is down are denoted $d_i^n$,

- the periods during which the service is down are denoted $d_i^s$.

Prior transmission, control applications need to select and/or tune the QoS profile required to achieve an expected Quality of Experience (QoE). For instance, the latency (or "PDB" in 5G for "Packet Delay Budget") can be set equal to the traffic period in case of periodical control applications. The PER is generally derived from the control availability and reliability requirements. The reliability is a metric that evaluates rather the probability of the service to perform as required under given conditions for a given time interval. It is often measured in terms of the Mean Time Between Failures (MTBF).

The reliability (linked to the parameter MTBF) can be given as:

- Rn = E[$u_i^n$] for the network (communication quality), and
- Rs = E[$u_i^s$] for the control service itself (quality of control of the agent),

E[x] denoting the statistical expectation or mean of the random variable x.

The availability can be given by:

- An = E[$u_i^n$] / (E[$u_i^n$]+ E[$d_i^n$]) for the network, and
- As = E[$u_i^s$] / (E[$u_i^s$]+ E[$d_i^s$]) = Rs / (Rs+ E[$d_i^s$]) for the service.

In the example of figure 2, if the survival time ST is for example ST=2 (time increments), then the service is lost at the third consecutive errors (ST+1).

It is therefore possible to link control-related performance (here the reliability and availability) to communication-related performance (here the PER ($p$)) through the survival time ST. Assuming an independent occurrence of the packet losses and no service recovery time, it can be shown that the following parameters of figure 2:

- The reliability Rn, for the communication network part, can be given by $R_n = \frac{1}{p}$ ,
- The availability An, for the communication network part, can be given by $A_n = 1 - p$,
- The reliability Rs of the communication service can be given by $R_s = \frac{1}{p^m}$
- And the availability As of the communication service can be defined as $A_s = 1 - p^m$

Thus, the packet error ratio PER ($p$) requirement can be obtained from the communication service availability ($A_s$) requirement as follows:

$$p \leq \sqrt[m]{1 - A_s}$$

In practice, errors might be correlated and thus occur in bursts. Alternative solutions to compute the required PER assuming errors behave as a finite state Markov chain can be devised.

More generally, the QoS profile required to achieve a given Quality of Experience (QoE) may change over time for some specific control applications. For instance, the survival time (and thus the PER) required for the control of a moving robot is not the same when the robot is going into a straight line at low speed or when the robot negotiates a U-turn at a significant speed. Indeed, while being in a straight line, the robot can afford losing more packets (larger survival time and thus larger PER) as the control command does not vary significantly over time. Conversely, while negotiating a curve, the robot cannot afford so much consecutive packets as the command rapidly changes over time.

The example of figure 3 reflects this situation where "quick" variations of the state of an agent cannot afford the loss of more than two packets (ST=2) while slower variations of the state of the agent over time make it possible to lose up to eight packets (ST=8).

Therefore, a larger ST can be afforded for slow variations of the agent's current state. In this case, the agent needs less telecommunication resources. More telecommunication resources can be provided to other connected agents, so as to reduce congestion probabilities due to their communications needs.

It is assumed below that the wireless communication system implements a QoS mechanism to reach the Quality of Experience required by the control application. Dealing with QoS, a focus is made more specifically thus on the PER parameter that is derived from the control-related reliability and availability requirements through the above-defined survival time parameter (maximum number of consecutive command losses a system can afford before going into the emergency mode) which appears as a suitable metric notably for agents' control. For some control applications, the survival time, and thus the required PER, varies over time according to the current state of the agent for achieving the same QoE (i.e., achieving the same control performance).

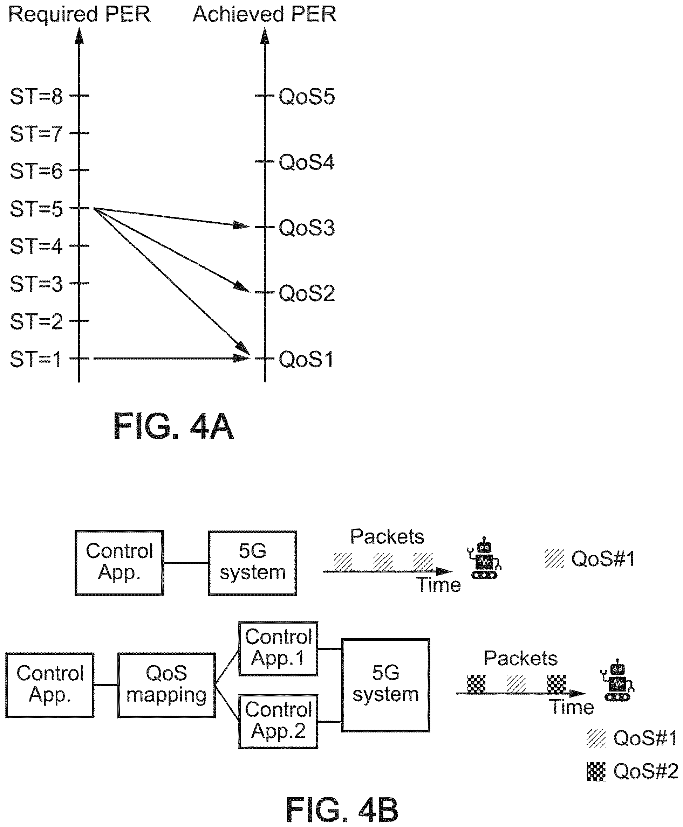

A focus is made below on applications that exploit that feature to reduce the probability of congestion by opening several QoS flows (at least two) with different PER levels and by mapping the control commands to one of those that fulfil the required PER. The list of QoS profiles associated to the several QoS flows is populated with QoS profiles among those supported by the communication device. The list shown on the example of figure 4A can be populated arbitrarily, e.g., with equally spaced PERs (on a logarithmic scale with all other QoS parameters and characteristics being equal otherwise). The most important point is to perform the mapping between the supported survival times (for instance, from 1 to 8) and the QoS profiles such that each survival time is mapped to a list of admissible QoS profiles, e.g., QoS profiles with a PER lower or equal to the PER required by the survival time. This is shown on figure 4A where the list of admissible QoS is depicted for ST equal to 1 and 5 in the presented example. As the only parameter that changes between the QoS profiles is the PER, it is possible to classify or rank the QoS profiles according to the value of the PER. The lower the PER is, the most demanding is the QoS profile in terms of communication resources.

It is proposed here to identify the list of admissible QoS profiles by estimating on-line the Survival Time (ST) according to the current state of a given agent and the knowledge of a space-state model (which can be stochastic or not), describing the dynamics of the agent. The main issue is to be able to estimate a parameter which value depends on a future evolution of the agent. It is proposed here to estimate the survival time relying on a simulation of the agent using a model of its dynamics. However, alternatively or complementarily, it is possible also to get real data (i.e. obtained in situ) from observations of the operation of the agent, to learn typical operating trajectories of the agent given an operating context, and especially its survival times given its trajectory. These data can be learnt online. Typically, for critical situations that cannot be implemented without risking damage to the agent, a mixture of simulated data (offline) and real data (obtained online) can be processed together, for example in the same way as described here.

As detailed later in the present description, the survival time can be estimated by running for example Monte-Carlo simulations where a model is implemented to drive an agent with a so-called fallback command over several realizations of the disturbances. To overcome the processing complexity of the Monte-Carlo simulations, a Neural Network (NN) can be trained to estimate the survival time from the current agent's state, its predicted trajectory using the model driven by the fallback commands and the planned trajectory. The training is performed at an appropriate pace using a demanding QoS among several agents. After training, the NN can be used to estimate the ST at each time step.

Depending on the STs computed for the different agents, respective QoS (which can be different one from another) can be requested to the wireless network.

Many telecommunications systems such as the 5G network (noted 5GS below) usually open a single QoS flow to transmit all the traffic related to a given application. But for some control applications, the Survival Time (ST) that measures the number of consecutive command losses that a system can afford before going into an emergency mode varies over time according to the actual state of the agent.

In such cases, using a single QoS profile thus requires configuring the PER according to the smallest ST, even if this value is only scarcely required. As a result, the system may use more resources than required most of the time increasing the probability of congestion issues.

It is proposed hereafter to deal with systems that open several QoS flows to map the control information in the most appropriate one, i.e., the one that requires the less radio resources while satisfying the control requirements corresponding to the actual state of the agent. Dealing with 5G, a solution would be to open several QoS flows and lure the system by making the application appears as several distinct control applications as shown in the example of figure 4B.

As shown on the upper part of figure 4B, a native behaviour of a 5G network would naturally lead to a one-to-one mapping between a given application and one single corresponding QoS level.

The lower part shows how to "lure" the 5G network by requesting here two different QoS flows for a same application, but presenting alternatively two different QoS level requests according to two apparent "different control applications" (1 and 2), because the needed QoS varies in time according to the value of the survival time and the agent performing the control application might need a high QoS level (short survival time) or a lower QoS level (long survival time).

This mapping of the control commands over different QoS flows can be applied in different manners.

It can be made by always selecting the less demanding (terms of network resources) but compatible QoS profile (that enables to achieve the required QoE) to save at most radio resources. This comes at the expense of experiencing more packets losses thus degrading the overall quality of the control. Indeed, the loss of packets, i.e., the application of fallback commands, leads the system to deviate from its planned trajectory more often, i.e., to exhibit a degraded variance.

It can be made by always selecting the most demanding QoS except in case the system is close to or being congested. This requires either the communication system to signal the control server from the possible or actual congestion using internal measurements, or the control server to predict or detect congestion situations. As the server typically serves many agents, it can detect from the overall traffic such congestion situations, e.g., using feedbacks from the agents or the communication system itself.

It can be made by selecting a QoS profile that, while enforcing the required QoE at any time, establishes a given trade-off between control performance and radio resource saving. Indeed, in case several QoS flows have been opened with different PER levels, at any time there exists at least one level that is compatible with the current state of the agent, possibly only the highest one in the most demanding situations and otherwise a given number of QoS levels including the highest one.

One problem is thus to, upon the definition of the appropriate list of admissible QoS profiles, select the optimal one according to any of the proposed strategies listed hereabove.

The QoS profile could be selected by implementing a learning algorithm such as the Reinforcement Learning (RL) approach proposed in the unpublished patent application EP23305537.5

In this document, the algorithm maximizes a reward function that jointly tends to keep the state of the agent below a tolerance value while encouraging the use of the QoS level that requires the less radio resources. A strong advantage of this approach is to enable the selection of the QoS profile within a list of QoS profiles that can differ in terms of any of the supported features: PER, PDB, priority, etc. Another advantage of the RL approach is to allow for a fine adaptation to the communication system practically in use. Communication systems may indeed significantly differ in terms of implementation of the QoS support.

But this assumption is true if the learning can be performed on-line using the real communication system or offline using an accurate model of the true system.

The RL approach also suffers from some other limitations, even if its approach is very promising.

First, it is rather difficult to strictly enforce the control tolerance. It is thus required to select a specific tolerance for the learning below the target value and to check afterwards the compliance with the target. In the reward function proposed in the above cited document, the trade-off between the control and communication performance is rather implicit. Several reward functions might be worth to be tested to devise the actual trade-off. There might also be issues with the on-line learning that requires to leave the system going possibly into failure. Finally, another limitation of this approach appears when the tested QoS profiles assume very small PERs. In such cases, it is required to perform very long learning phases to leave the system go through rare events such as several consecutive errors for small errors.

In the RL approach, the algorithm evaluates all the QoS profiles independently of the current state of the agent. In other words, the algorithm has no knowledge of the instantaneous admissible QoS profiles.

A more appropriate approach would be to select the QoS profiles among the list of admissible QoS profiles according to the actual state of the agent. This could also be performed using a RL algorithm or more straightforward solutions. The QoS profile can be selected within the list of admissible QoS profiles according to the non-exhaustive list of solutions already introduced above and summarized as follows:

- Always the most demanding QoS profile,
- Always the less demanding QoS profile with or without the detection of congestion issues,
- By ranking the admissible QoS profiles according to the control/communication trade-off they provide and selecting the one that enables to reach a target trad-off.

For the later, it is to be understood that all the admissible QoS profiles enable to reach the target QoS but with more or less degradations on the control performance, e.g. in terms of variance around the optimal trajectory. For all these approaches, it is required to first identify the list of admissible QoS profiles, operation that is performed from the estimation of the agent's survival time at each iteration.

This problem is addressed hereafter.

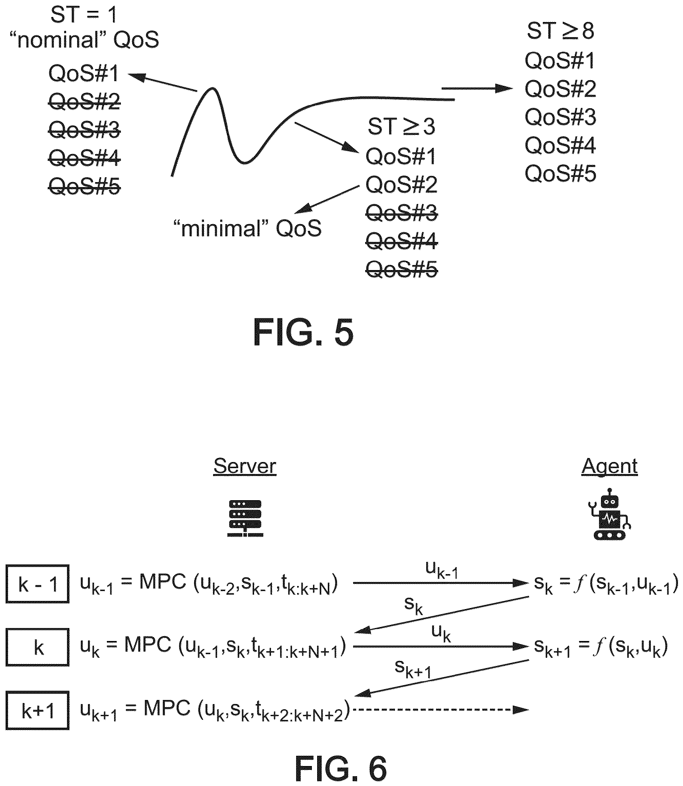

In the example shown in figure 5, five different QoS levels can be requested depending on the value of the survival time over time. It is reminded that the variation shown on figure 5 is related to the state of the agent over time. The state of the agent at a given time depends on the latest data obtained from measurements performed by sensors on the agent and/or the agent's environment, and on at least one latest control command received from the controller and being implemented by the agent. A state function of the agent, noted $x(k)$ ($k$ being a time iteration), can be established as follows:

$$x(k) = x(k-1) + u(k)$$

Where $x(k-1)$ is the state function at the previous iteration $k-1$ and $u(k)$ is a term related to the latest received command. A current observation of the agent's state can be given therefore by:

$$y(k) = x(k) + b(k)$$

Where $b(k)$ is related to a "noise" due to hazards of the environment.

Typically, when a packet is correctly received by the agent, a command $u(k)$ sent at a time $k$ by the controller can be a function of the latest available observation of the agent's state, i.e.:

$$u(k) = f(y(k-1))$$

On the other hand, when a data packet is lost (a command or sensors' data) at a time k, then the agent can have to continue to use the latest valid command received (at $k$-1 for instance), i.e.:

$$u(k) = u(k-1)$$

Therefore, when the agent's state is varying fast, typically around the first peak of figure 5, the system (the controller plus the given agent) cannot afford the loss of more than one packet, for example, and therefore a high level of QoS is necessary. The QoS that is to be provided is the maximal one QoS#1 (the 5G "nominal" level). When the variation of the agent's state is intermediary, two levels QoS#1 and QoS#2 can be used: if telecommunications resources need to be shared with other agents, the minimal one QoS#2 will be requested for the given agent. When the state varies slowly (at the end of the curve of figure 5), anyone of the five QoS levels QoS#1 to QoS#5 can be requested for the given agent since the survival time can be the longest in this part of the curve, compared to the short survival time related to the first peak of figure 5.

In the example of figure 5 where a maximum number of five different levels of QoS can be assigned to the agent, it can be decided, for example, that:

- When the survival time value ST equals 1 (i.e. is not higher than 1), then only one nominal QoS level QoS#1 can be assigned to the agent,
- When the survival time value ST is equal or higher than 3, then the QoS level that can be assigned to the agent is in a list of two QoS levels: QoS#1, QoS#2,
- When the survival time value ST is equal or higher than 5, then the QoS level that can be assigned to the agent is in a list of three QoS levels: QoS#1, QoS#2, QoS#3,
- When the survival time value ST is equal or higher than 7, then the QoS level that can be assigned to the agent is in a list of four QoS levels: QoS#1, QoS#2, QoS#3, QoS#4,
- When the survival time value ST is equal or higher than 8, then the QoS level that can be assigned to the agent is in a list of five QoS levels: QoS#1, QoS#2, QoS#3, QoS#4, QoS#5.

If for example, the survival time currently determined for the agent according to its current state trajectory is ST=4, then the QoS level to assign can be chosen among the list of the two different QoS levels: QoS#1, QoS#2.

Of course, the survival time threshold values can depend on the number of available QoS levels, and on the values of these QoS levels themselves.

As appearing also on figures 3 and 5, the survival time is linked to a speed of variation of the agent's state. Typically, a first derivative of a state function of the agent may not represent enough this speed of variation, but the second derivative of the state function can be a parameter to represent it. For example, an absolute value of the second derivative of the state function:

- below a first threshold would promote the choice of the minimal level QoS#5,
- between the first threshold and a second threshold (higher than the first threshold) would promote the choice of intermediate level QoS#4,
- etc., until the maximal level QoS#1 is reached.

However, calculating a second derivative of a current state of the agent may not be accurate enough. A first solution is to perform tests offline and to voluntarily simulate packets losses to determine the number of consecutive packets the system can afford before going into a risk of failure, i.e. into the emergency mode. Another solution is to compute a prediction function of the agent's state according to on-line observations and learnings. Therefore, the curve shown on figure 5 can be related more particularly to the variation over time of a prediction function of the agent's state.

Indeed, some algorithms can be implemented to compute a prediction of the state of the agent based on a current state and a current command $u(k)$ to apply, and even a fallback command $u'(k + 1)$ (sent with the current command $u(k)$) to apply if the next command $u(k + 1)$ is not received by the agent.

It is proposed here to rely on the availability of a model (typically a space-state model) describing the evolution of the agent's state over time. Target applications are those where the control is performed using typically a Model-based Predictive Control (MPC) approach. In this class of algorithms, the controller uses the knowledge of the system model to compute the next command(s) taking into account the future evolution of the system, as disclosed for example in the unpublished patent application document EP23315151.3

The model of the system is assumed to be known beforehand. But the model can also be learned on-line using any appropriate method (including Neural Networks). This would enable the application of the proposed method for control applications that do not require the knowledge of the model (e.g., with PID controllers, "PID" for "Proportional integral derivative").

It is proposed to leverage on the availability of a model for the system to compute on-line the survival time associated to the current state of the agent. From this knowledge, it would then be possible to select a QoS profile compatible with this survival time, i.e., considering the capacity of the agent to continue its course without any new command for a given amount of time (or time increments) before going into an emergency mode. To further describe this embodiment, it is assumed that the dynamics of the agent is described by a discrete-time state-space equation

$$s_{k+1} = f(s_k, u_k) + n_k$$

wherein $s_k$ is the state of the agent at time or iteration k, $u_k$ the command computed to steer the state to the next state, $f(.)$ a possibly nonlinear function known beforehand by the controller of the agent, and $n_k$ a random process that represents the noise possibly affecting the observation of the updated states and/or the model imperfections.

Common models are the point-mass, unicycle, or bicycle. The general process of the control is depicted on figure 6, where, at iteration $k - 1$, the controller of the agent (for example a server) computes the first command $u_{k-1}$ required to drive the system along the planned trajectory $t_{k:k+N}$ over an horizon of $N$ time steps from the next expected pose $t_k$ at time $k$ up to time $k + N$ using an MPC algorithm ("Model-based Predictive Control").

Any of the numerous MPC algorithms can be used here starting from a basic deterministic MPC that ignores the random process $n_k$, robust MPC algorithms that account for the maximum deviation of the noise process up to stochastic MPCs that account for the statistical description of the noise.

The server then sends the command to the agent that uses the command to update its state. To simplify, it is assumed that the agent observes its full state $s_k$ and sends it to the server that can then perform a new iteration of the MPC algorithm.

Concentrating now on the iteration $k$, the server needs to determine the QoS profile required to transmit the new command $u_k$. As previously explained, the QoS is derived from the value of the survival time measured for the agent being in state $s_k$ known by the server.

It is reminded that the survival time corresponds to the maximum number of steps the agent can handle without receiving any updated command before going into an emergency mode. The emergency mode is defined here as a state from which at least one of the physical characteristics of the agent will go beyond a predetermined tolerance or deviation margin. This can be measured for instance on one or several components of the agent state such as the distance from its position to the planned trajectory (e.g., using an orthogonal projection), a speed limit or any other parameter related to safety for the environment around the agent (material and human beings) or to the health of the agent itself (e.g., the overheating of a motor for example). In terms of wording, the state of the agent defined to describe its state-space equations is to be differentiated here from the status of the agent that relates to any of its physical characteristics.

At least two reasons can explain the agent not being updated by a new command:

- the observation of the previous state is not received by the server, or

- the newly processed command is not received by the agent.

In both cases, the agent needs to apply a so-called hereafter "fallback command", selected without loss of generality as equal to the last command properly received or applied. Coming back to the example of figure 6, starting from iteration k, the agent being in state $s_{k+1}$ will start applying the fallback command $u_{k-1}$ in case the command $u_k$ did not reach

the agent, or the observation of $s_k$ did not reach the server preventing it from computing the new command $u_k$ and thus send it.

The survival time is then defined as the number of steps the agent can update its state using the last command $u_{k-1}$ without going into emergency mode. In other words, applying one more time the command $u_{k-1}$ to update the agent will bring it into emergency mode.

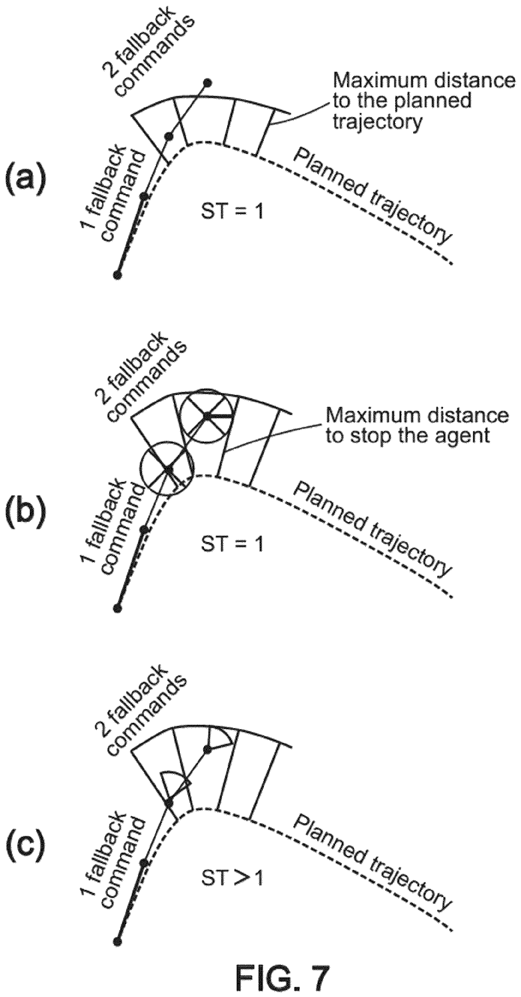

Going into emergency mode can typically mean that it is required to stop the agent, or that it must reduce its speed down to a safety value, etc. The conditions for going into emergency mode can be defined directly from the current state of the agent. For instance, it may be decided to turn the agent into emergency mode as soon as the distance from the position of the agent to the planned trajectory goes beyond a given tolerance margin (for an autonomous car, for instance). An example of this situation is shown in figure 7-(a). A more refined approach would be to trigger the emergency mode if the agent would break a tolerance margin after completion of its stopping from its last position. To simplify, this condition can be checked in advance by the agent looking in all directions and assuming a maximum distance for the agent to stop whatever the supported speed, acceleration, and orientation of the agent are, as shown in the example of figure 7-(b). This can be further refined by reducing the range of tested angles around the moving direction of the agent as shown in figure 7-(c).

In the present case, it is required to compute the survival time on-line at the server typically by means of simulations. One issue is here to deal with the presence of noise in the model. It is indeed required to find ways to handle the lack of real observations during the simulations. A first solution is to basically ignore the random part, i.e., to replace the unobserved state by its average or mean value (assuming a centered noise process) as:

$$\bar{s}_{k+1} = f(s_k, u_k)$$

But this approach assumes a deterministic behavior of the agent, which is not the case in general. The survival time can then be computed according to the following algorithm:

- Initialization: $ST = P+1$ (ST is greater or equal to $P$)
- For $N_{fall}$ in [1 ... $P$]

  ◦ Apply the fallback command $u_{k-1}$ to the deterministic model
  ◦ Measure the distance $\Delta_s$ from the position of the agent to the planned trajectory
  ◦ If $\Delta_s > \Delta_{th}$

    ▪ $ST = N_{fall} - 1$, break

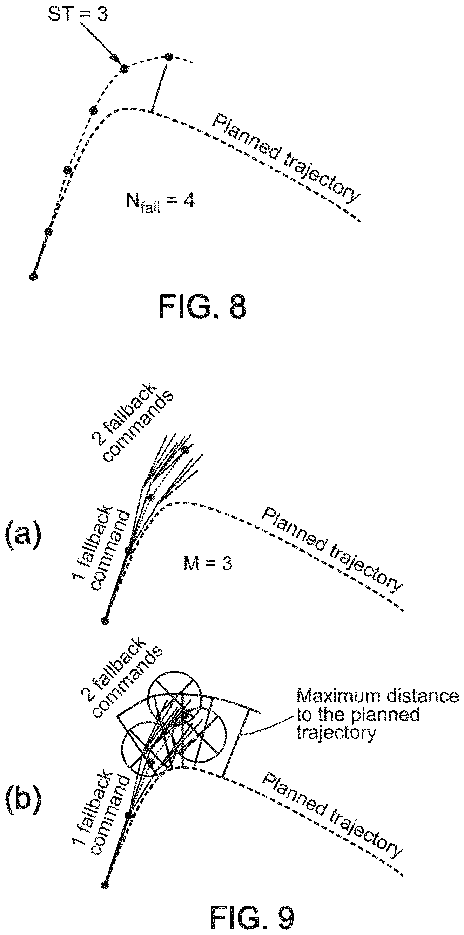

  wherein $N_{fall}$ is the number of consecutive fallback commands applied to the model, $P$ is the maximum number of tested survival time values and $\Delta_{th}$ the tolerance margin that is used to trigger the emergency mode. The general principal of the algorithm is depicted on figure 8. The algorithm is described here using the basic comparison of the distance between the position of the agent and a planned trajectory. Any other relevant condition computed from the status of the agent could equally be applied.

On figure 8, the upper dashed-line curve corresponds to the trajectory achieved through the application of $N_{fall}=4$ consecutive fallback commands using a noiseless model. The lower dashed-line curve is the planned trajectory (the solid line representing the achieved trajectory) and the bar between the two dashed-line curves illustrates the maximum deviation before going into emergency mode.

Relying on the noiseless model can be satisfactory for small values of the noise variance.

Another alternative is to apply a Monte-Carlo simulation where, for each application of the fallback command, a given number of M possible states are randomly drawn from the model using the known probability function of the noise process.

This process is iteratively applied starting from the first application of the fallback command $u_{k-1}$ from the known state $s_{k+1}$. Then, for each generated path, the fallback command is again applied $M$ times and so on. This is illustrated on the example of figure 9-(a) for $M=3$.

Another solution is simply to draw several random paths with a given length equal to the maximum number of tested consecutive fallback commands.

The computation of the survival time can no more be iteratively searched as in the noiseless case. Indeed, for the same number of consecutive fallback commands applied to the model, for some paths the emergency mode shall be fired while the other ones remain below the threshold. In other words, the survival time needs to be described as a random value. This is illustrated on figure 9-(b) assuming that the emergency mode is triggered based on the "stopping in all directions" condition (as previously introduced on figure 7-(b)). On figure 9-(b), each time a purple circle goes beyond the red distance the survival time equals to one. But there are other paths that remain below the threshold for the same number of 2 consecutive fallback commands. On figure 9, the positions that can be reached upon stopping are only showed for three achievable states for clarity. In practice, more achievable states may lead to crossing the red threshold upon stopping.

For each point, the survival time is described by its probability mass function computed according to the following algorithm

- Compute $N_{tot}$ random paths assuming a maximum number of consecutive fallback commands ($T_{fall,max}$) being applied to the model
- Initialize $ST_{histogram} = zeros(T_{fall,max} - 1)$
- Mark all paths as active
- For $N_{fall}$ in [1 ... P]

  ○ For each active path

    ▪ Measure the distance $\Delta_s$ from the position of the agent at time step $N_{fall}$ to the planned trajectory

    ▪ If $\Delta_s > \Delta_{th}$

      • $ST_{histogram}(N_{fall} - 1) = ST_{histogram}(Nf_{all} - 1) + 1$
      • Mark the path as inactive

- Normalize $ST\_histogram$

The statistical property of the survival time ST can be further described using its cumulative distribution function (CDF) that measures:

$$CDF_{ST}(x) = \Pr\{ST \leq x\}$$

The required QoS profile can then be computed selecting for survival time ST corresponding for example to the 90-percentile value (the probability the ST falls below this value equals 90%).

In the methodology described above, the condition for turning the agent into emergency mode is tested on the state of the agent after application of consecutive fallback commands. In practice, even if the agent starts to be operated again in nominal mode after losing a few consecutive commands (i.e., thus applying fallback commands), the agent may deviate away from the planned trajectory up to firing the condition to fall in emergency mode when applying the MPC algorithm in the very following time steps.

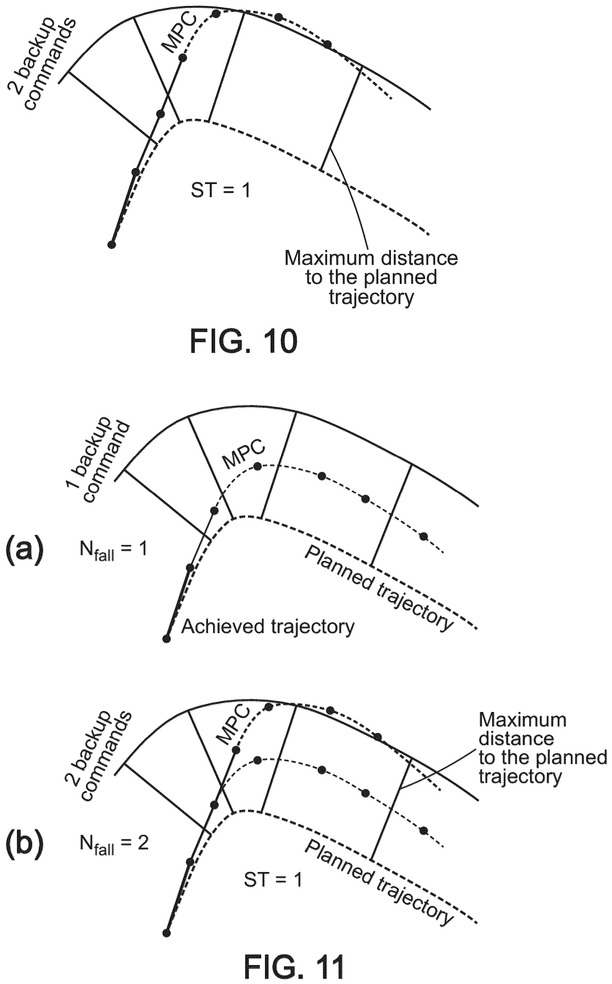

For more accuracy, it is proposed hereafter to define the need to go into emergency mode from a prediction of the agent's trajectory starting from the application of the last fallback command when the agent would start to receive newly updated commands. This can be evaluated by running a given number of MPC iterations after the application of the last fallback command, as shown in the example of figure 10. Again, the issue is here that this simulation of the MPC cannot be conducted using the actual observations of the state obtained after application of the computed command (the agent being simulated and not actually run).

This is precisely one advantage of the MPC to reiterate the optimization at each time step to account for imperfect predictions. Several solutions can be devised to cope with this issue. The most basic one is again to assume a noiseless system (as done for the scenario where the survival time is evaluated only from the application of the fallback commands). The survival time can then be evaluated according to the following algorithm:

- Initialization: $ST = P$ (the survival time ST is greater or equal to $P$)
- For $N_{fall}$ in [1 ... P]

  ○ Apply the fallback command $u_{k-1}$ to the deterministic model
  ○ If $\Delta_s > \Delta_{th}$, $ST = N_{fall} - 1$, break
  ○ Else

    • For $i$ in [1 ... $L - N_{fall}$]
    • Run one iteration of the MPC algorithm and update the model
    • Measure the deviation $\Delta_s$ from the planned trajectory
    • If $\Delta_s > \Delta_{th}$, $ST = N_{fall} - 1$, break

wherein $L$ is the overall horizon the emergency mode is tested for (assuming no other command is lost over this period of time).

In this algorithm, the state is updated and predicted using the deterministic model assuming no noise. Basically, in case the distance of the agent (or any other metric) from the planned trajectory would go beyond a tolerance margin after some MPC iterations upon applying $N_{fall}$ times the fallback command, then the survival time should be set to $N_{fall}$ - 1.

The principle of the algorithm is depicted on figure 11. The condition to trigger the emergency mode is the basic one based on the distance from the last position to the planned trajectory. The other approaches relying on the maximum distance to stop could equally be used.

It shall be mentioned that assuming a deterministic system would enable to send not only the first command but also a few consecutive ones for the fallback mode. But the proposed algorithm remains relevant in such a case. This approach also remains relevant in the case of a model noise with a small variance. Otherwise, it is possible to apply again the principle of Monte Carlo simulations as described above for the computation of the survival time solely from the application of the fallback commands. The application of the fallback commands is applied according to any of the previously proposed approaches.

Assuming $N_{fall}$ is being tested, then, and if ST is not yet found, for each of the final state obtained by means of the Monte Carlo simulation with application of $N_{fall}$ fallback commands, at least the three following methods can be applied

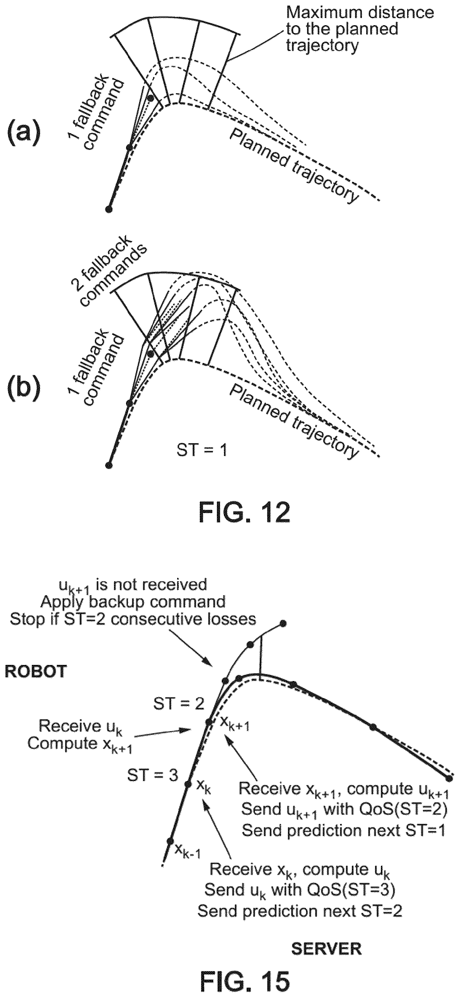

- Compute a single trajectory using the MPC algorithm assuming a noiseless system (as shown un the example of figure 12 commented below),
- Compute a single trajectory using the MPC algorithm assuming a noisy system but with a single random selection of the noise at each step,
- Compute several trajectories using the MPC algorithm assuming a noisy system but with a single random selection of the noise at each step.

In all these cases, the survival time is selected e.g., from the building of its CDF. For instance, considering the first option above, the probability mass function of the survival time can be computed according to the following algorithm:

- Compute $N_{tot}$ random paths assuming a maximum number of consecutive fallback commands ($T_{fall,max}$) being applied to the model
- Initialize $ST_{histogram}$ = *zeros*($T_{faull,max}$ - 1)
- Mark all path as active
- For $N_{fall}$ in [1 ... P]

  ○ For each active path

    ■ Measure the distance $\Delta_s$ from the position of the agent at time step $N_{fall}$ to the planned trajectory
    ■ If $\Delta_s > \Delta_{th}$

      • $ST_{histogram}$ ($N_{fall}$ - 1)= $ST_{histogram}$($N_{fall}$ - 1) + 1
      • Mark the path as inactive

    ■ Else

      • For i in [1 ... $L$ - $N_{fall}$]

        ○ Run one iteration of the MPC algorithm and update the model
        ○ Measure the deviation $\Delta_s$ from the planned trajectory
        ○ If $\Delta_s > \Delta_{th}$

          ■ $ST_{histogram}$($N_{fall}$ - 1)= $ST_{histogram}$($N_{fall}$ - 1) + 1
          ■ Mark the path as inactive
          ■ Break

  • Normalize $ST\_histogram$

Figure 12 shows the impact that trajectory predictions can have on the estimated survival time.

In all the previous developments, it is assumed that the state $s_k$ is available as a starting point to compute the survival time. However, it has been mentioned that the agent shall apply the fallback command in case the new command

$u_k$ computed from the state $s_k$ is not received but also in case the server cannot compute the new command if the observation of $s_k$ is not received. To cover this last case, it is proposed to predict this value using the noiseless model or randomly generate a state value using the complete model, either once or applying a Monte Carlo procedure.

In an embodiment, the survival time is estimated as floating point value. Indeed, since the survival time is related to a time value (number of successive time increments without receiving an updated command), considering the survival time as a floating value makes it possible to adapt its value to any change of time increment duration.

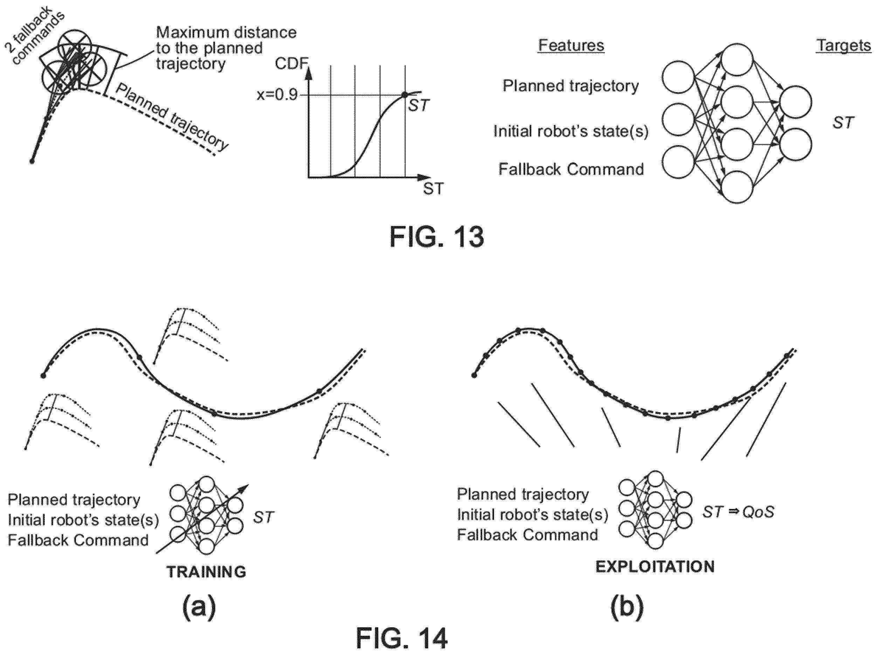

The approaches introduced above appear as rather demanding in terms of processing power. It is proposed here to estimate the survival time using a Neural Network from the current state of the agent, the fallback command and the planned trajectory (as presented in figure 13). Several alternatives can be contemplated to define the input features:

- A given number of past states including the last one,
- A given number of past commands including the last one,
- The fallback command(s),
- The coefficients obtained from a polynomial fitting applied onto the planned trajectory,
- Etc.

Once the learning phase achieved, the ST can readily be computed from the same input features using the Neural Network. While the learning can be performed only from time to time to deal with the processing constraint - during this phase, the most demanding QoS can be used - the ST can be computed at each time step with a reasonable complexity (as shown on figure 14) to apply the most appropriate QoS profile according to the current state of the agent.

Another advantage of the proposed solution is to enable the on-line learning of the Neural Network, thus enabling the estimation of the ST from the actual behaviour of the agent in its environment.

The proposed method can also be enhanced by combining the learning from several agents of the same kind, thus improving both the learning speed and the adaptation to the various environment that can be met by the agents. The learning can be performed by the server that would gather all the data. The learning can also be performed on-board by the agents, the overall neural network being constructed using the so-called "Federated Learning paradigm".

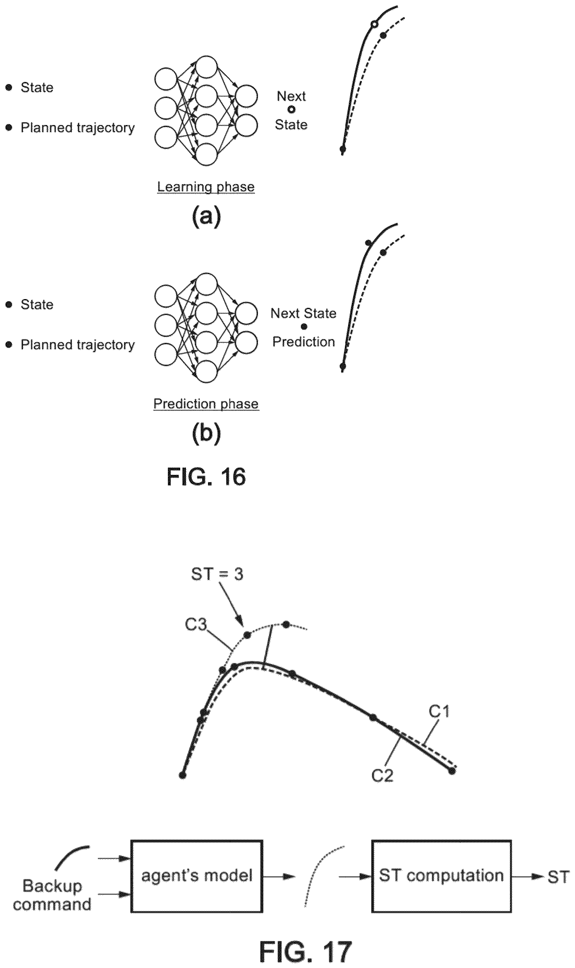

If the new command is not received by the agent, the agent applies the fallback command, but needs to know the Survival Time to stop on due time in case of consecutive packet losses. The control server needs to send in advance the prediction of the Survival Time for the future step that is not known: this is illustrated in figure 15. It is proposed to build a predictor of the future state, i.e., learn a model of the overall system (controller and agent). The Survival Time for the next state can then be computed from the predicted state to be sent in advance (figure 16).

The method proposes thus to predict, at each time step, the evolution of the system (agent and controller) when driven with several consecutive fallback commands, and here, the survival time is then estimated by measuring a "distance" between the predicted state and the target trajectory using an appropriate tolerance metrics.

As shown in the example of figure 17, the curves in the upper part of this figure are related to:

- the planned trajectory of the agent's state: C1,
- the achieved trajectory of the agent's state: C2,
- the predicted trajectory of the agent's state when successive packets are lost (using the model): C3.

The distance between the planned trajectory C1 and the predicted trajectory C3 after few packet losses is illustrated by a straight-line segment indicating a maximum tolerated deviation before the agent goes into the emergency mode and stops.

Once the learning phase is achieved, the survival time can readily be computed using the Neural Network. While the learning can be performed only from time to time to deal with the processing constraint - during this phase, the most demanding QoS can be used - the survival time can be computed at each time step with a reasonable complexity to apply the most appropriate QoS profile according to the current state of the agent.

Each survival time can be determined from the maximal distance between the predicted trajectory and the planned trajectory, that the system can afford before going into the emergency mode. The exploitation of the neural network makes it possible to find back the learnt survival times corresponding to a similar previous planned trajectory.

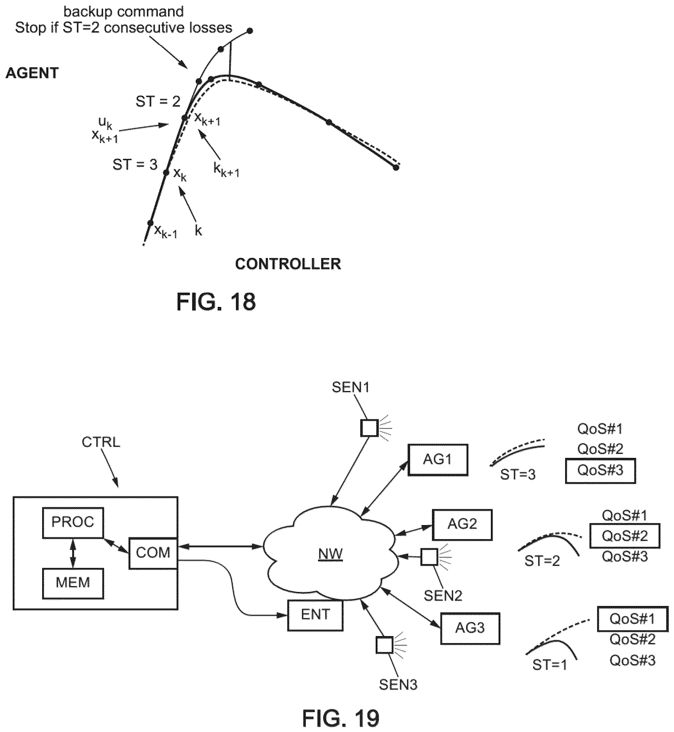

Figure 18 shows an example (similar to the case of figure 15) of such an exploitation phase, where typically the controller has received sensed data enabling to determine a state x(k) of the agent at time k, and to compute a corresponding command u(k). Command u(k) (along with a fallback command u'(k+1)) has been sent to the agent with a QoS corresponding to ST=3 (since the state variation was observed to be relatively flat from k-1 to k) and with a prediction of a next ST=2 for example (the variation becoming less flat then). The agent successfully receives and applies command u(k) and sensors measure the state (or more generally an observation) of the agent x(k+1) which is received by the controller. The controller computes u(k+1) (and u'(k+2)) based on x(k+1) (and based on u(k) as well for the fallback command) and sends u(k+1) (and u'(k+2)) to the agent with the QoS corresponding to ST=2 along with a QoS prediction corresponding to ST=1 due to the curvature to be expected at k+2.

In the example, u(k+1) and the fallback command u'(k+2) (in the same data packet for example) are not received by the agent. Then the fallback command u'(k+1) (previously received with u(k)) is to be applied by the agent for the next time iteration k+1. At this time iteration k+1, the survival time value is 2, and then the agent shall go into emergency mode if two consecutive packets are lost.

Therefore, in this example of embodiment, if a new command is not received by the agent, the agent applies the fallback command, but needs to know the survival time to stop on due time in case of consecutive packet losses. The controller needs to send in advance the prediction of the survival time for the future step that is not known.

The survival time can finally represent a metric to determine the list of possible QoS levels to propose to the controller to select one QoS level in the list for the agent, depending on, for example, the network conditions. It can be understood thus that the survival time can be learnt from observations, but the list of QoS levels that can be proposed, as well as the QoS levels themselves, can also be learnt from past observations.

An example of embodiment of a system to implement the method described above is shown in figure 19 where the controller CTRL comprises a processing unit including typically:

- a memory MEM storing at least instructions data of a computer program according to the present description,
- a processor PROC cooperating with the memory MEM to read and execute the instructions of the computer program,
- a communication interface COM cooperating with the processor PROC to transmit and receive data to and from the wireless network NW.

In the example of figure 19, the processor PROC transmits more specifically (through the interface COM) successive commands to a plurality of agents AG1, AG2, AG3... and receives from sensors of respective agents' environments SEN1, SEN2, SEN3, ... sensed data, based on which the processing unit of the controller CTRL is able to determine a current state of each agent AG1, AG2, AG3...

More specifically, based on the current state of each agent and on command currently applied by each agent AG1, AG2, AG3..., the processing unit computes a predicted state and thereby a survival time value for each agent (applying anyone of the methods described above: neural network implementation, fallback command calculation, fallback command calculation plus Monte-Carlo algorithm implementation, fallback command calculation plus neural network implementation (plus possibly Monte-Carlo algorithm implementation), or even second derivative calculation).

The available QoS levels that the network NW can provide are listed as QoS#1> QoS#2> QoS#3... The processing unit of the controller CTRL assigns the lowest QoS level (QoS#3) to the agent having the highest survival time value (ST=3), and the highest QoS level (QoS#1) to the agent having the lowest survival time value (ST=1). These data of QoS levels assignments are transmitted from the processor PROC (through the interface COM) to an entity of the network NW responsible for providing data packets to an agent according to the QoS level assigned by the controller to that agent.

It should be noted that these QoS levels assignments can depend on the level of congestion of the network. Typically, if the level of congestion can be lower than the situation shown in figure 19, higher QoS levels can be assigned: for example, QoS#1 to AG3 and AG2, and QoS#2 to AG1.

More generally, the present description is not limited to the embodiments described as examples above, but it can encompass other alternatives.

Typically, several alternatives can be contemplated to define input features to calculate the survival time. In an embodiment, the survival time can be estimated on the basis of:

- A given number of past states including the last one, before a maximum "distance" is reached between a planned agent's state trajectory and a predicted computed trajectory,
- A given number of past commands including the last one, before reaching said maximum distance,
- The fallback command,
- Coefficients obtained from a polynomial fitting applied onto the planned trajectory,
- etc.

## Claims

1. A method implemented by computer means to request an adapted level of Quality of Service "QoS" for a given agent, wirelessly connected through a telecommunication network to a controller to perform a task, by applying successive control commands received from the controller and based at least on sensed data successively received by the controller,

The requested QoS level being chosen in a list proposing a plurality of different QoS levels, ordered from a highest QoS level to a lowest QoS level,

Wherein a survival time is determined for said given agent at a current time, said survival time being defined as number of consecutive control commands not applied by the agent due to communication failure with the controller, and that the agent can afford before going into an emergency mode,

And wherein the number of QoS levels proposed in the list depends on the survival time, the lower the survival time is, and the lower said number of proposed QoS levels is, the list being reduced, depending on the survival time, by removing the lowest QoS levels from the list.

2. The method according to claim 1, wherein the agent is configured to use a control command received from the controller at each corresponding time increment, and, in case of communication failure with the controller, the agent is configured to use at least one predetermined fallback command for a given number of successive time increments before going into the emergency mode, said survival time corresponding to said given number of successive time increments before going into the emergency mode.

3. The method according to claim 2, wherein the survival time is determined from an application of a model giving the survival time, knowing:

- at least a current operation of the agent, and
- said at least one fallback command that the agent applies in case of communication failure.

4. The method according to claim 3, wherein the model is built from learning observations of similar current operations of the agent, and applications of one or several successive fallback commands until the agent is to be driven into the emergency mode.

5. The method according to claim 4, wherein said current operation of the agent is defined according to a planned trajectory of operation of the agent, and the model learns from a multiplicity of given planned trajectories, respective numbers of successive fallback commands as survival times corresponding to each planned trajectory, that the agent can apply within a tolerance margin relatively to the given planned trajectory before going into the emergency mode (FIG. 7).

6. The method according to anyone of claims 4 and 5, wherein said current operation of the agent is defined according to a planned trajectory of operation of the agent, and the model determines, based on said planned trajectory, a number of successive fallback commands as the survival time, that the agent can apply before receiving again control commands from the controller and reaching again the planned trajectory, without going into the emergency mode (FIG. 12).

7. The method according to anyone of claims 4 to 6, wherein said learning is performed at least partly offline.

8. The method according to anyone of claims 4 to 7, wherein said learning is based at least partly on statistical observations implemented by a Monte-Carlo algorithm.

9. The method according to anyone of claims 2 to 8, wherein the controller is configured to send to the agent, along with a current control command, at least one switching command to use as a fallback command in case the agent does not receive a new control command after said current control command.

10. The method according to anyone of claims 2 to 9, wherein the controller is configured to send to the agent, along with a current control command, a survival time currently determined to allow the agent to apply a number of successive fallback commands after the application of said current control command and before going into the emergency mode, in case the agent does not receive a new control command after said current control command, said number of successive fallback commands to apply corresponding to the survival time received from the controller.

11. The method according to anyone of the preceding claims, wherein a future state of the agent is determined from a prediction function of the state of the agent after an implementation of a current control command, and wherein the survival time is determined from an analysis of variation of said prediction state function, the less varying the prediction state function is within a time period and the higher the survival time is (FIG. 3).

12. The method according to anyone of the preceding claims, wherein, for said given agent and for other agents sharing resources of said telecommunication network with said given agent:

- a survival time is determined for each agent,
- the agents are sorted according to their respective determined survival times, from the lowest survival time to the highest survival time, and
- a QoS level is assigned to each communicating device, depending on its survival time, the highest QoS level being assigned to the device having the lowest survival time, while the lowest QoS level is assigned to the device having the highest survival time (FIG. 19).

13. A computer program comprising instructions causing the implementation of the method according to anyone of the precedent claims, when said instructions are executed by a processing unit.

14. A controller, comprising a processing unit to implement the method according to anyone of claims 1 to 12, the processing unit being configured to:

- determine a survival time for the agent, and
- request to the wireless network a level of QoS for the agent, said level of QoS depending on the determined survival time.

15. The controller of claim 14, connected to a plurality of agents, wherein the processing unit is configured to determine a current survival time for each agent, and to request to the wireless network a level of QoS for each agent, said level of QoS depending on the current survival time of the agent and on currently available resources provided by the telecommunication network (FIG.10).

FIG. 1

- ▨ Service down      ▲ Packet not received
- ▨ Service up        △ Packet received
- ▨ Service recovering

FIG. 2

FIG. 3

Required PER    Achieved PER

ST=8 — — QoS5

ST=7 —

ST=6 — — QoS4

ST=5 — — QoS3

ST=4 —

ST=3 — — QoS2

ST=2 —

ST=1 — — QoS1

# FIG. 4A

Control App. — 5G system — Packets → Time — 🤖 — ▨ QoS#1

Control App. — QoS mapping — Control App.1 / Control App.2 — 5G system — Packets → Time — 🤖

▨ QoS#1
▨ QoS#2

# FIG. 4B

EP 4 708 806 A1

ST = 1
"nominal" QoS

QoS#1
~~QoS#2~~
~~QoS#3~~
~~QoS#4~~
~~QoS#5~~

ST ≥ 8
QoS#1
QoS#2
QoS#3
QoS#4
QoS#5

ST ≥ 3
QoS#1
QoS#2
~~QoS#3~~
~~QoS#4~~
~~QoS#5~~

"minimal" QoS

## FIG. 5

Server

Agent

$k-1$   $u_{k-1} = MPC(u_{k-2}, s_{k-1}, t_{k:k+N})$    $\xrightarrow{u_{k-1}}$   $s_k = f(s_{k-1}, u_{k-1})$

$\xleftarrow{s_k}$

$k$   $u_k = MPC(u_{k-1}, s_k, t_{k+1:k+N+1})$    $\xrightarrow{u_k}$   $s_{k+1} = f(s_k, u_k)$

$\xleftarrow{s_{k+1}}$

$k+1$   $u_{k+1} = MPC(u_k, s_k, t_{k+2:k+N+2})$   $\dashrightarrow$

## FIG. 6

**FIG. 7**

ST = 3

$N_{fall} = 4$

Planned trajectory

FIG. 8

(a)

2 fallback commands

1 fallback command

M = 3

Planned trajectory

(b)

2 fallback commands

1 fallback command

Maximum distance to the planned trajectory

Planned trajectory

FIG. 9

**FIG. 10**

2 backup commands

MPC

ST = 1

Maximum distance to the planned trajectory

**(a)** $N_{fall} = 1$

1 backup command

MPC

Planned trajectory

Achieved trajectory

**(b)** $N_{fall} = 2$

2 backup commands

MPC

Maximum distance to the planned trajectory

ST = 1

Planned trajectory

**FIG. 11**

Maximum distance
to the planned
trajectory

(a)

1 fallback command

Planned trajectory

(b)

2 fallback commands

1 fallback command

Planned trajectory

ST = 1

## FIG. 12

$u_{k+1}$ is not received
Apply backup command
Stop if ST=2 consecutive losses

ROBOT

ST = 2

$x_{k+1}$

Receive $u_k$
Compute $x_{k+1}$

ST = 3    $x_k$

Receive $x_{k+1}$, compute $u_{k+1}$
Send $u_{k+1}$ with QoS(ST=2)
Send prediction next ST=1

$x_{k-1}$

Receive $x_k$, compute $u_k$
Send $u_k$ with QoS(ST=3)
Send prediction next ST=2

SERVER

## FIG. 15

## FIG. 13

(a) TRAINING

(b) EXPLOITATION

## FIG. 14

EP 4 708 806 A1

- State
- Planned trajectory

Next
State

Learning phase

(a)

- State
- Planned trajectory

Next State

Prediction

Prediction phase

(b)

FIG. 16

ST = 3

C3

C1

C2

Backup command → agent's model → ST computation → ST

FIG. 17

backup command
Stop if ST=2 consecutive losses

**AGENT**

$ST = 2$

$u_k$
$x_{k+1}$

$x_{k+1}$

$ST = 3$

$x_k$

$k_{k+1}$

$x_{k-1}$   $k$

**CONTROLLER**

**FIG. 18**

CTRL

PROC

COM

MEM

ENT

NW

SEN1

AG1

AG2

SEN2

AG3

SEN3

$ST=3$

QoS#1
QoS#2
QoS#3

$ST=2$

QoS#1
QoS#2
QoS#3

$ST=1$

QoS#1
QoS#2
QoS#3

**FIG. 19**

Europäisches
Patentamt
European
Patent Office
Office européen
des brevets

**EUROPEAN SEARCH REPORT**

Application Number

EP 24 30 6455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/400842 A1 (SZABÓ GÉZA [HU] ET AL) 14 December 2023 (2023-12-14) | 1,11-15 | INV.<br>H04L47/80 |
| A | * abstract *<br>* paragraphs [0014], [0037] *<br>* paragraphs [0041] - [0042] *<br>----- | 2-10 | H04L41/5025<br>H04L67/61<br><br>ADD.<br>H04W28/24 |
| Y | US 2021/337404 A1 (SUN HAIYANG [CN]) 28 October 2021 (2021-10-28) | 1,11-15 | |
| A | * abstract *<br>* paragraphs [0100] - [0102] *<br>----- | 2-10 | |
| A | EKATERINA ABRAMOVA ET AL: "RLOC: Neurobiologically Inspired Hierarchical Reinforcement Learning Algorithm for Continuous Control of Nonlinear Dynamical Systems",<br>ARXIV.ORG, CORNELL UNIVERSITY LIBRARY, 201 OLIN LIBRARY CORNELL UNIVERSITY ITHACA, NY 14853,<br>7 March 2019 (2019-03-07), XP081130789,<br>* paragraph [Section2.3] *<br>----- | 1-15 | |

TECHNICAL FIELDS
SEARCHED (IPC)

H04L
H04W

The present search report has been drawn up for all claims

| Place of search | Date of completion of the search | Examiner |
|---|---|---|
| The Hague | 3 February 2025 | Jurca, Dan |

EPO FORM 1503 03.82 (P04C01)

## ANNEX TO THE EUROPEAN SEARCH REPORT
## ON EUROPEAN PATENT APPLICATION NO.

EP 24 30 6455

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2025

| Patent document cited in search report | | Publication date | Patent family member(s) | | Publication date |
|---|---|---|---|---|---|
| US 2023400842 | A1 | 14-12-2023 | EP | 4247596 A1 | 27-09-2023 |
| | | | US | 2023400842 A1 | 14-12-2023 |
| | | | WO | 2022105992 A1 | 27-05-2022 |
| US 2021337404 | A1 | 28-10-2021 | CN | 111432440 A | 17-07-2020 |
| | | | CN | 115988579 A | 18-04-2023 |
| | | | EP | 3902324 A1 | 27-10-2021 |
| | | | US | 2021337404 A1 | 28-10-2021 |
| | | | WO | 2020143298 A1 | 16-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305537

- EP 23315151